# EUROPÄISCHE PATENTSCHRIFT

(11) **EP 2 373 578 B1**
(45) Veröffentlichungstag und Bekanntmachung des Hinweises auf die Patenterteilung: **22.05.2019**
(21) Anmeldenummer: 09767960.9
(22) Anmeldetag: 01.12.2009
(51) Int. Cl.: C01B 21/20, B01J 8/00, B01J 8/02, B01J 19/00, B01J 12/00, B01J 15/00

(54) **VORRICHTUNG UND VERFAHREN FÜR KATALYTISCHE GASPHASENREAKTIONEN SOWIE DEREN VERWENDUNG**
DEVICE AND METHOD FOR CATALYTIC GAS PHASE REACTIONS AND USE THEREOF
DISPOSITIF ET PROCÉDÉ POUR RÉACTIONS CATALYTIQUES EN PHASE GAZEUSE ET LEUR UTILISATION

(30) Priorität: 02.12.2008 DE 102008059930
(43) Veröffentlichungstag der Anmeldung: 12.10.2011
(73) Patentinhaber: thyssenkrupp Industrial Solutions AG, 45143 Essen (DE)
(72) Erfinder: SCHWEFER, Meinhard, 59872 Meschede (DE); GROVES, Michael, 58285 Gevelsberg (DE); FUCHS, Jürgen, 44139 Dortmund (DE); MAURER, Rainer, 58332 Schwelm (DE); SIEFERT, Rolf, 33378 Rheda-Wiedenbrück (DE); HÜNDGEN, Bernhard, 46483 Wesel (DE)
(74) Vertreter: Brosch, Oliver
(86) Internationale Anmeldenummer: PCT/EP2009/008553
(87) Internationale Veröffentlichungsnummer: WO 2010/063448

(56) Entgegenhaltungen:
- EP-A1- 0 334 710
- EP-A1- 1 028 089
- WO-A1-2008/148487
- US-A- 5 266 291

## Beschreibung

Die vorliegende Erfindung betrifft verbesserte Reaktoren für katalytische Gasphasenreaktionen und damit durchzuführende Verfahren, insbesondere verbesserte Oxidationsverfahren, wie Verfahren zur Ammoniakoxidation, weiche sich beispielsweise als Komponenten bei der Herstellung von Caprolactam oder insbesondere von Salpetersäure verwenden lassen.

Bei der Durchführung von katalytischen Gasphasenreaktionen wird in vielen Fällen Reaktionswärme freigesetzt. Diese kann in die vor der Reaktionszone liegenden Abschnitte des Reaktors gelangen, beispielsweise durch Wärmeleitung über die aufgeheizten Reaktorwände, durch Konvektion vermittelt durch in Gegenstromrichtung sich bewegende Wirbel der Reaktionsgase oder durch Wärmestrahlung. Als Folge dieses Wärmetransports kann sich das Eduktgas bereits vor Erreichen der Reaktionszone so stark erhitzen, dass vor Erreichen dieser Zone bereits unerwünschte Nebenreaktionen oder unkontrolliert ablaufende Vorreaktionen die Folge sind.

Ein Beispiel für eine in großem Maßstab industriell durchgeführte exotherme Gasphasenreaktion ist die Herstellung von Salpetersäure ("HNO₃"). Diese erfolgt im industriellen Maßstab im allgemeinen nach dem Ostwald-Verfahren durch katalytische Oxidation von Ammoniak an Platin-/Rhodium-Katalysatoren. Dabei wird Ammoniak ("NH₃") sehr selektiv zu Stickstoffmonoxid ("NO") oxidiert, welches dann im Laufe des weiteren Prozesses zu Stickstoffdioxid (.NO₂^{u}) oxidiert wird und schließlich mit Wasser in einem Absorptionsturm zu HNO₃ umgesetzt wird. Die Pt/Rh-Katalysatoren sind als dünne Netze ausgebildet und in einem Brenner auf breiter Fläche aufgespannt. Übliche Dimensionen für diese Netze liegen im Bereich von 0,5-5 m Durchmesser. Die Stärke der Netzpackung beträgt üblicherweise, je nach Anzahl der eingesetzten Netze, wenige Millimeter bis maximal 2 Zentimeter.

Die Netze werden von einem Sauerstoff- und Ammoniak-haltigen Gemisch durchströmt. Die Zusammensetzung dieses Gemisches wird durch Verdünnung so geregelt, dass die untere Explosionsgrenze immer im sicheren Abstand unterschritten wird, um die Gefahr einer Explosion oder Verpuffung - auch in Apparaten und Leitungen vor den Netzen - zu vermeiden. Bei der Herstellung von Salpetersäure und in einigen Verfahren zur Herstellung von Caprolactam dienen als Verdünnungsmittel die inerten Komponenten der Luft, vor allem Stickstoff, dass heißt, atmosphärische Luft und Ammoniak werden gemischt, so dass Gemische mit typischerweise etwa 8 - 12% Ammoniak entstehen. Bedingt durch die Exothermie der Reaktionen auf den Netzen stellt sich dort eine Temperatur im Bereich von etwa 800°C - 950°C ein. Bekannt sind aber auch Verfahren zur Herstellung von Stickstoffmonoxid und von Hydroxylaminsulfat als Zwischenstufe in der Herstellung von Caprolactam, bei denen Ammoniak mit Sauerstoff katalytisch oxidiert und das Ammoniak-/Sauerstoffgemisch mit Wasserdampf versetzt und so verdünnt wird (vergl. dazu GB-A-1,139,849 und RU-A-2,127,222).

Das heiße Reaktionsgas wird anschließend in einem Wärmeaustauscher abgekühlt, in dem Dampf erzeugt oder Prozessgas erwärmt wird.

Grund für die gewählte Katalysatorgeometrie von großem Durchmesser bei sehr geringer Höhe der Netze ist, dass die NH₃-Oxidation wegen möglicher Folgereaktion des NO einerseits mit einer sehr geringer Verweilzeit erfolgen muß und andererseits, dass der durch die Durchströmung der Netze hervorgerufene Druckverlust sowie die mechanische Belastung der Netze möglichst gering gehalten werden soll. So erfolgt die Durchströmung der Netze bei der industriellen HNO₃-Produktion mit relativ geringer Lineargeschwindigkeit je nach Druckbereich im Bereich von etwa 0,4 - 1,0 m/s bei atmosphärischen Bedingungen, von etwa 1 - 3 m/s bei Mitteldruckoxidation im Bereich von 3 - 7 bar abs und von etwa 2 - 4 m/s bei Hochdruckoxidation im Bereich von 8 - 12 bar abs, wobei die Geschwindigkeitsangaben als Leerraumgeschwindigkeiten für das durch die Reaktionswärme aufgeheizte Gas zu verstehen sind. Bei zu schneller Anströmung kann zudem die Reaktion auf den Pt/Rh-Netzen durch die kühlende Wirkung des eintretenden Gasstromes erlöschen ("Blow-out'-Phänomen).

Die Untergrenze der Anströmgeschwindigkeit für das Ammoniak-Sauerstoff-Inert-Gemisch ist durch die Flammgeschwindigkeit einer möglichen thermischen Ammoniakverbrennung markiert, so dass ein Rückschlag der auf dem Katalysator gezündeten Reaktion in den freien Gasraum vor dem Katalysatorbett in jedem Fall ausgeschlossen ist.

Neben den klassischen Netzkatalysatoren wird in der wissenschaftlichen und Patentliteratur auch der Einsatz von auf Übergangsmetalloxiden basierenden Nichtedelmetall-Katalysatoren zur Ammoniakoxidation beschrieben. Diese können entweder für sich allein oder auch in Kombination mit Pt/Rh-Netzen eingesetzt werden.

Eine diesbezügliche Übersicht findet sich beispielsweise in Sadykov et al., Appl. Catal. General A: 204 (2000) 59-87. Triebkraft zur Verwendung von Nichtedelmetall-Katalysatoren ist die Einsparung von Edelmetallen, insbesondere von Platin. Edelmetall-Katalysatoren verbrauchen sich nämlich bei der Ammoniakoxidation und müssen so, je nach Belastung der Netze, in Abständen von etwa drei Monaten bis zu einem Jahr ausgetauscht werden, was erhebliche Kosten verursacht.

Üblicherweise werden die auf Übergangsmetalloxiden basierenden Katalysatoren ebenso wie auch die Pt/Rh-Netzkatalysatoren mit relativ niedrigen Anströmgeschwindigkeiten durchströmt. Dieses ist hier insbesondere deshalb notwendig, um die einmal auf den Katalysatoren gezündete Ammoniakoxidation nicht wieder zu löschen. Auf Übergangsmetalloxiden basierende Katalysatoren sind nämlich in der Regel weniger aktiv als Edelmetall-Katalysatoren und weisen im Vergleich zu diesen eine deutlich höhere Anspringtemperatur als auch eine höhere Löschtemperatur auf.

In WO-A-99/25,650 werden Maßnahmen beschrieben, wie durch den Einsatz von sehr feinkörnigen Katalysator-Pellets, welche in sogenannten Kartuschen ("cartridges") untergebracht sind, die "blow-out" Temperatur gesenkt werden kann, ohne dabei den Druckvertust zu weit ansteigen zu lassen.

Bei der katalytischen Oxidation von Ammoniak besteht zudem immer das Problem, dass sich Ammoniak vor der Kontaktierung mit dem eigentlichen Oxidationskatalysator z.B. an heißen Rohrwandungen entzündet und dabei unselektiv zu N₂ und H₂O oder auch N₂O verbrennt.

In EP-A-1,028,089 ist beschrieben, dass es durch Rückstrahlung der Ammoniakverbrennung auf Verteilereinbauten zur Zuführung des NH₃/Luftgemisches zur Erhitzung dieser Einbauten kommen kann, wodurch ein Teil des eintretenden NH₃ auf der Oberfläche dieser Einbauten zu N₂O oxidiert wird.

US-A-5,266,291 beschreibt einen Reaktor, der in der Eintrittszone - dort Mischzone genannt - eine Packung aus inertem Material aufweist. In die Mischzone kann ein Kühlmedium, z.B. Wasser, eingedüst werden, um die Temperaturen in der Mischzone abzusenken. Alternativ oder zusätzlich kann der Reaktormantel in der Mischzone mit Wasser gekühlt werden. Ferner beschreibt dieses Dokument die Möglichkeit, dass auch die Reaktionszone mit einem Kühlmantel umgeben sein kann und dass auch in die Reaktionszone Wasser eingedüst werden kann, um die Temperatur darin abzusenken und auf diese Weise das Risiko unkontrollierter Reaktionen zu verringern. In den Reaktor werden unterschiedliche Gasströme in die Mischzone eingeleitet, welche sich in der dort vorhandenen Packung vermischen und sodann der Reaktionszone zugeführt werden. Neben der Funktion als Mischer verhindert die Packung auch noch das Auftreten von Explosionen.

EP-A-334,710 beschreibt einen Reaktor, der aus einer Stahlwand aufgebaut ist. Diese ist auf der Reaktorinnenseite mit einer Beschichtung aus refraktärem Beton versehen und diese wiederum wird auf der Innenseite durch eine Hülse aus Mullit abgedeckt. Diese Maßnahmen sind vorgesehen, um die Gasphasenreaktionen unter hohem Druck vornehmen zu können. Der in diesem Dokument dargestellte Reaktor weist in der Eintrittszone - dort Dispersionszone genannt - ebenfalls eine Schüttung sowie zwei Zuleitungen für das Einleiten unterschiedlicher Eduktgase auf. Auch in diesen Reaktor werden unterschiedliche Gasströme in die Dispersionszone eingeleitet, welche sich in der dort vorhandenen Packung vermischen und sodann der Reaktionszone zugeführt werden. Neben der Funktion als Mischer verhindert die Packung auch hier noch das Auftreten von Explosionen.

Des Weiteren kann auf WO 2008/148487 bzw. CL 2008/001646, und Thiemann et al., Nitric Acid, Nitrous Acid, and Nitrogen Oxides, Ullmann's Encyclopedia of Industrial Chemistry, 2000, verwiesen werden.

Das Problem der NH₃-Vorzündung ist insbesondere bei den technisch relevanten, hohen NH₃-Konzentradonen von 8-12 Vol.% von Bedeutung, da sich hier durch die Exothermie der Reaktion die Verbrennung selbst unterhält und sogar verstärken kann.

Neben der eigentlichen Zündtemperatur, d.h. der kritischen Oberflächentemperatur, oberhalb welcher eine NH₃-Zersetzung auftreten kann, ist deshalb auch der Abtransport der durch die NH₃-Zersetzung frei werdenden Wärme von maßgeblicher Bedeutung.

Dieser Abtransport wird um so besser, je schneller der mit Ammoniak beladene Gasstrom über die Oberflächen strömt (Kühlwirkung) und je kälter dieser ist. Außerdem verkürzt sich die Verweilzeit das Eduktgasstromes vor Kontaktierung mit dem Katalysator und damit die Reaktionszeit der möglichen unselektiven Vorreaktion.

Bei der industriellen Herstellung von HNO₃ durch Oxidation von Ammoniak über Pt/Rh-Netzen ermöglicht die niedrige Anspringtemperatur der hochaktiven Pt/Rh-Katalysatoren eine relativ geringe Eintrittstemperatur von ca. 200°C. Auf diese Weise stellt die Ammoniakvorzündung trotz der niedrigen Anströmgeschwindigkeiten keine Hürde zur industriellen Realisierung des Verfahrens dar.

Beim Einsatz von Katalysatoren mit geringerer katalytischer Aktivität muß jedoch bei höheren Temperaturen (Vorheizung) des Eduktgasgemisches gearbeitet werden oder mit geringeren Anströmgeschwindigkeiten oder vorzugsweise mit einer Kombination beider Maßnahmen. Unter diesen Bedingungen steigt das Risiko einer Ammoniakvorzündung.

Versuche mit Wabenkatalysatoren, welche im Vergleich zu den Platinnetzen einen geringeren Querschnitt und eine größere Tiefe des Katalysatorbettes aufweisen, haben nun gezeigt, dass die Selektivität der Bildung des gewünschten NOₓ bei geringen Anströmgeschwindigkeiten des Eduktgasgemisches nur sehr gering ist. Die Wirtschaftlichkeit eines solchen Verfahrens ist somit in Frage gestellt. Dieser Effekt könnte theoretisch durch Erhöhung der Anströmgeschwindigkeit des Eduktgasgemisches kompensiert werden. In der Praxis aber sind einer Erhöhung der Anströmgeschwindigkeiten Grenzen gesetzt, da eine unverhältnismäßige Erhöhung des Druckverlustes auftritt und zudem unter Umständen nur eine unvollständige Umsetzung des Ammoniaks erreicht wird.

Bei anderen industriell betriebenen exothermen Gasphasenreaktionen, wie z.B. anderen Oxidationsreaktionen als der Ammoniakoxidation, Epoxidierungen oder radikalischen Halogenierungen von Kohlenwasserstoffen bestehen prinzipiell die gleichen Probleme.

Aufgabe der vorliegenden Erfindung ist die Bereitstellung eines Reaktors und eines Verfahrens zur Durchführung von katalytischen, exothermen Gasphasenreaktionen, bei denen die Risiken der Vorzündung des eingesetzten Eduktgases oder Eduktgasgemisches bzw. des Ablaufes unerwünschter Nebenreaktionen verringert sind.

Die vorliegende Erfindung betrifft einen Reaktor für katalytische, exotherme Gasphasenreaktionen durch Umsetzung eines Eduktgases gemäß den Ansprüchen 1-12.

### Eduktgas und Zuleitung (30)

Unter "Eduktgas" bzw. Eduktgasgemisch" ist im Rahmen dieser Beschreibung ein Gasgemisch zu verstehen, das aus mehreren chemischen Stoffen besteht, von denen mindestens einer in erwünschter Weise in der Reaktionszone (2) des erfindungsgemäßen Reaktors unter Bildung einer oder mehrerer gewünschten Produkte reagiert, wobei die zusätzliche Bildung von unerwünschten Nebenprodukten nicht ausgeschlossen ist und welches mindestens ein Oxidationsmittel und mindestens eine zu oxidierende Komponente enthält. Das Eduktgas enthält mehrere chemische Stoffe, die miteinander in erwünschter Weise in der Reaktionszone (2) reagieren, nämlich mindestens eine zu oxidierende Verbindung, wie Ammoniak, und mindestens eine oxidierende Verbindung, wie Sauerstoff, wobei eine oder mehrere für die miteinander reagierenden Stoffe inerte Substanzen ebenfalls im Eduktgas enthalten sind. Besonders bevorzugt als inerte Komponenten sind die Bestandteile der Luft außer Sauerstoff, vor allem Stickstoff. Die inerte Komponente bzw. die inerten Komponenten dienen dazu, durch Verdünnung der chemisch aktiven Stoffe eine etwaige untere Explosionsgrenze sicher zu unterschreiten und so die Gefahr einer Explosion in der Zuleitung (30), der Eintrittszone (1) oder der Reaktionszone (2) zu beseitigen. Eine weitere Aufgabe, die von der bzw. den inerten Komponenten bei Bedarf erfüllt wird, ist die Geschwindigkeit der in der Reaktionszone stattfindenden Reaktionen zu moderieren um Katalysatorschäden durch lokale Überhitzung zu vermeiden, bzw. durch die zusätzliche Wärmekapazität der inerten Komponenten die Temperaturerhöhung in der Reaktionszone (2) zu reduzieren, um einen durch die Exothermie der Reaktionen unzulässigen Temperaturanstieg zu verhindern, der sonst zu schädlich hohen Temperaturen im Reaktorteilen oder Katalysatoren führen könnte.

Kennzeichnend für das Eduktgas bzw. Eduktgasgemisch ist, das es bereits vor oder spätestens bei Eintritt in die Eintrittszone (1) so weit homogenisiert, d.h. stofflich durchmischt ist, wie es für die erfolgreiche Durchführung der erwünschten Reaktion bzw. Reaktionen in der Reaktionszone (2) notwendig ist.

Dies erfolgt in einem in der Strömungsrichtung vor der oder den Zuleitungen (30) angeordneten Apparat. Alternativ dazu kann das Durchmischen der Stoffe unmittelbar vor dem Einleiten in die Eintrittszone (1) erfolgen. In den meisten Fällen wird die erforderliche Durchmischung erreicht, wenn die örtlichen Konzentrationen im Eduktgas der in der Reaktionszone miteinander reagierenden Stoffe Variationskoeffizienten von ≤ 0,1 aufweisen, vorzugsweise kleiner als 0,05, besonders bevorzugt kleiner als 0,03. Die Durchführung der Durchmischung bzw. die hierzu erforderlichen Apparate und zu treffenden Maßnahmen sind dem Fachmann bekannt. Derartige Apparate für die Durchmischung sind beispielsweise statische Mischer. In diesen Apparaten werden die zu durchmischenden Gase in einen Kanal geleitet, in dem fest eingebaute Bleche, Rohre oder andere Formen installiert sind, die durch die erzeugte Turbulenz, beim Durchfließen mit Gas, zu einer guten Durchmischung der Gase führen. Weitere Beispiele für Apparate zur Durchmischung sind dynamische Mischer. Solche Apparate enthalten ein oder mehrere bewegliche Elemente. Die Bewegung wird üblicherweise durch elektrische Energie verursacht. Die Bewegung führt zur Turbulenz, die zur guten Durchmischung der eintretenden Gase führt.

Mit dem Variationskoeffizienten der örtlichen Konzentrationen eines Stoffes ist das Verhältnis der Standardabweichung der örtlichen Stoffkonzentrationen zum Mittelwert der örtlichen Stoffkonzentrationen gemeint. Die Stoffkonzentration kann beispielsweise in mol/m³, kg/Liter, ppm oder anderen Konzentrationseinheiten angegeben werden. Da der Variationskoeffizient das Verhältnis der Konzentrationen beinhaltet, ist er dimensionslos und unabhängig von der gewählten Konzentrationseinheit. Der Variationskoeffizient ist ein gängiger Maßstab für die Güte einer Mischung bzw. für die Leistung eines Mischungsapparates. Der erreichte gewichtete Variationskoeffizient der örtlichen Konzentrationen in einem Kanal oder Rohr kann z.B. anhand der örtlichen Konzentrationen und Gasgeschwindigkeiten ermittelt werden, die durch Probeentnahme respektive Pitotrohrmessung an einer ausreichenden Anzahl von über dem Querschnitt des Kanals oder Rohrs gut verteilten Messpunkten bestimmt werden. Auch kann der zu erwartende Variationskoeffizient der örtlichen Stoffkonzentrationen rechnerisch vorausgesagt werden. Lieferanten von Mischungsapparaten geben üblicherweise den mit ihren Apparaten zu erwartenden Variationskoeffizienten der Stoffkonzentrationen an, die sie rechnerisch oder durch Versuche ermittelt haben.

### Eintrittszone (1)

Unter Eintrittszone (1) ist im Rahmen der vorliegenden Beschreibung der Innenraum des Reaktors zu verstehen, der sich zwischen der mindestens einen Zuleitung (30) zur Einleitung des stofflich durchmischten Eduktgases oder des Eduktgasgemisches und der Reaktionszone (2) befindet. Dabei handelt es sich in der Regel um einen leeren Raum. Allerdings kann dieser auch funktionelle Einbauten, wie strömungsleitende Vorrichtungen, aufweisen, die nicht der Durchmischung dienen, d.h. eine mögliche Durchmischung nur als zusätzlichen sekundären Effekt bewirken. Beispiele für funktionelle Einbauten sind Einbauten zur Vergleichmäßigung der Gasströmung über den Querschnitt der Eintrittszone, wie z.B. Leit- oder Umlenkbleche, Lochbleche, Maschendrähte, Lamellen oder Strömungsgleichrichter. Weitere mögliche funktionelle Einbauten sind Messeinrichtungen, wie z.B. Probeentnahmesonden oder Instrumente zur Messung von Druck oder Druckverteilung. Weitere mögliche funktionelle Einbauten sind Einbauten zum Kühlen oder Heizen des Gasgemisches durch Wärmeaustausch mit anderen Medien, die durch Rohre oder andere in der Eintrittszone eingebauten Kanäle fließen. Weitere mögliche funktionelle Einbauten sind elektrische Heizelemente, mit denen das Gasgemisch erhitzt wird. Weitere mögliche funktionelle Einbauten sind Zündvorrichtungen zum Starten der katalytischen Reaktion. Weitere mögliche funktionelle Einbauten sind Gebläse zur Erhöhung des Druckes des Gasgemisches. Weitere mögliche funktionelle Einbauten sind Turbinen zur Rückgewinnung von Energie aus dem Gasgemisch. Es kann auch eine Kombination von zwei oder mehreren dieser funktionellen Einbauten eingesetzt werden. Geeignete Zündvorrichtungen können Funken piezoelektrisch oder induktiv erzeugen oder sie erzeugen eine hohe Temperatur thermoelektrisch. Dadurch wird genügend Energie auf das eintretende Gasgemisch erzeugt, um die katalytischen Reaktionen zu initiieren. Die Energie kann auch indirekt auf das Gasgemisch übertagen werden, indem zunächst nur das Oxidationsmittel und gegebenenfalls die inerten Stoffe dem Reaktor zugeführt werden und ein leicht brennbares Gas (hier "Zündgas" genannt), wie beispielsweise Wasserstoff über eine gesonderte Zuleitung in die Zündvorrichtung geführt und gezündet wird. Die Flamme des brennenden Zündgases aus der Zündvorrichtung heizt den Katalysator auf die notwendige Reaktionstemperatur. Anschließend wird/werden zusätzlich die zu oxidierende(n) Komponente(n) des Gasgemisches dem Reaktor zugeführt. Wenn die erwünschten katalytischen Reaktionen begonnen haben, wird die Zufuhr des Zündgases beendet.

Da das Eduktgas bereits vor oder bei Eintritt in die Eintrittszone (1) gut durchmischt ist, kann in der Eintrittszone (1) auf Einbauten zur Durchmischung verzichtet werden. Insbesondere sind keine inerten Packungen zur Mischung oder Dispersion erforderlich.

Kennzeichnend für die Eintrittszone (1) und zur Unterscheidung vom Begriff "Zuleitung" (30) bzw. "Zuleitungen" (30) ist, dass ohne die Verwendung einer oder mehrerer der hier beschriebenen Maßnahmen zur Verringerung des Transports von in der Reaktionszone (2) entstandenen Wärme von der Reaktionszone (2) in die Eintrittszone (1), Bedingungen auftreten könnten, die zu unerwünschten Nebenreaktionen oder Vorzündungen in der Eintrittszone führen könnten. Die Zuleitung (30) oder Zuleitungen sind als so weit entfernt von der Reaktionszone (2) zu betrachten, dass diese keinen oder einen zu vernachlässigenden negativen Einfluss auf die Zuleitungen hat.

### Reaktionszone (2)

Unter Reaktionszone (2) ist im Rahmen der vorliegenden Beschreibung der Innenraum des Reaktors zu verstehen, der sich an die Eintrittszone (1) anschließt und der einen oder mehrere Katalysatoren für die exotherme Gasphasenreaktion enthält. In der Reaktionszone (2) erfolgt der überwiegende Teil der Reaktionen zwischen den Komponenten des Eduktgasgemisches. Die Art der Positionierung des Katalysators wird vom Fachmann nach bekannten Kriterien vorgenommen. Üblicherweise wird der Katalysator in Form von Packungen, Schüttungen, Netzen oder Waben angeordnet sein.

Es ist nicht zwingend notwendig, dass die Eintrittszone (1) von der Austrittszone (3) räumlich ausschließlich durch die Reaktionszone (2) getrennt wird. Vielmehr werden erfindungsgemäß Eintrittszone (1) und Austrittszone (3) zusätzlich durch eine Unterstützung für den Katalysator und für andere Einbauten in der Reaktionszone (2) getrennt . Die Unterstützung der Reaktionszone (2) muss nur zuverlässig verhindern, dass Eduktgas aus der Eintrittszone (1) direkt in die Austrittszone (3) unter Umgehung der Reaktionszone (2) fließt. Die der Eintrittszone (1) zugewandte Seite der Wand oder Unterstützung der Reaktionszone (2) wird der Eintrittszone (1), die der Austrittszone (3) zugewandte Seite der Austrittszone (3) zugezählt.

Die Reaktionszone (2) füllt also nur einen Teil des Durchmessers des erfindungsgemäßen Reaktors aus. Die Eintrittszone (1) geht im Teil des Reaktorquerschnitts, der nicht von der Reaktionszone (2) ausgefüllt wird, direkt in die Austrittszone (3) über.

### Austrittszone (3)

Unter Austrittszone (3) ist im Rahmen der vorliegenden Beschreibung der Innenraum des Reaktors zu verstehen, der sich an die Reaktionszone (2) anschließt und in der das Produkt enthaltende Gasgemisch aus dem Reaktor abgeführt wird. Dabei handelt es sich in der Regel ebenfalls um einen leeren Raum. Allerdings kann dieser auch funktionelle Einbauten, wie Vorrichtungen zur Halterung des Katalysators oder Vorrichtungen zur Wärmerückgewinnung, aufweisen. An die Austrittszone können sich weitere Reaktoren oder Nachreaktoren anschließen.

### Mittel zum Erschweren des Wärmerücktransports

Das Eduktgas reagiert in der Reaktionszone (2) ganz oder teilweise in exothermer Reaktion unter Bildung des Produktgases ab, welches anschließend durch die Austrittszone (3) den Reaktor verläßt. Es besteht das Risiko, dass die in der Reaktionszone (2) erzeugte Wärme durch Leitung, Konvektion und/oder Strahlung zumindest teilweise im Gegenstrom zum Eduktgas in die Eintrittszone (1) transportiert wird und dort das Eduktgas bzw. die Oberfläche der Reaktorwand in der Eintrittszone (1) in unvertretbarer Weise erhitzt.

Um dieses zu verhindern oder zumindest zu erschweren sind erfindungsgemäß zumindest im Bereich der Eintrittszone (1) Mittel vorgesehen, welche den Transport von in der Reaktionszone (2) erzeugten Wärme in die Eintrittszone (1) verringern. Der erfindungsgemäße Reaktor weist im Bereich der Eintrittszone (1) oder im Bereich der Eintrittszone (1), der Reaktionszone (2) und der Austrittszone (3) Mittel auf, welche den Transport von in der Reaktionszone (2) erzeugten Wärme in die Eintrittszone (1) verringern. Als Mittel zur Verringerung des Transports von in der Reaktionszone (2) entstandenen Wärme in die Eintrittszone (1) können unterschiedliche Lösungsansätze zum Einsatz gelangen.

Es ist erfindungsgemäß im Bereich der Eintrittszone (1) eine Vorrichtung zum Durchleiten eines Kühlmediums vorgesehen. Diese Vorrichtung nimmt die in der Reaktionszone (2) erzeugte Wärme teilweise auf, so dass diese Wärme für einen Wärmetransport in die Eintrittszone (1) nicht mehr zur Verfügung steht und/oder so dass diese Wärme an einer Stelle der Eintrittszone (1) in das Eduktgas eingeleitet wird, an der dieses noch so kühl ist, dass eine durch die Einleitung des Kühlmediums hervorgerufene Temperaturerhöhung unkritisch ist; oder das Kühlmedium kühlt die zur Reaktionszone (2) bzw. zur Austrittszone (3) benachbarte Eintrittszone (1) so stark ab, dass die Temperatur der Eintrittszone (1) trotz der aus der Reaktionszone (2) abgeleiteten Wärme im unkritischen Bereich bleibt. Besonders bevorzugt ist ein Reaktor mit einer Kombination beider Maßnahmen. Erfindungsgemäß ist im Bereich der Eintrittszone (1) als Mittel zur Verringerung des Transports von in der Reaktionszone (2) erzeugter Wärme in die Eintrittszone (1) eine Vorrichtung zum Durchleiten eines Kühlmediums vorgesehen, wobei die Vorrichtung zum Durchleiten eines Kühlmediums eine von einem Kühlmedium durchströmte Unterstützung für den Katalysator (4) ist, welche Eintrittszone (1) und Austrittszone (3) trennt.

In einer weiteren bevorzugten Ausführungsform sind im erfindungsgemäßen Reaktor zumindest im Bereich der Eintrittszone (1) oder im Bereich der Reaktionszone (2) Mittel vorgesehen, welche den Transport der in Reaktionszone (2) erzeugten Wärme in die Eintrittszone (1) verringern und die Innenwände des Reaktors sind zumindest im Bereich der Eintrittszone (1) oder im Bereich der Reaktionszone (2) aus inertem Material ausgestaltet.

### Inerte Materialien

In einer weiteren Ausgestaltung der Erfindung sind die Innenwände des Reaktors zumindest im Bereich der Eintrittszone (1) oder im Bereich Reaktionszone (2) aus inertem Material ausgestaltet. Diese Ausführungsform verhindert oder erschwert die katalytische Umsetzung des Eduktgases an den Reaktorinnenwänden. Die Ausgestaltung der Reaktorinnenwände aus inerten Materialien kann z.B. durch eine Beschichtung erfolgen oder die inerten Materialien liegen in Form von Hülsen im Reaktor vor. Auch können die Reaktorwände selbst aus inerten Materialien bestehen.

Der erfindungsgemäße Reaktor ist vorzugsweise im Bereich der Eintrittszone (1) oder im Bereich der Reaktionszone (2) oder im Bereich der Eintrittszone (1) und der Reaktionszone (2) oder im Bereich der Eintrittszone (1), der Reaktionszone (2) und der Austrittszone (3) aus inertem Material ausgestaltet.

Unter dem Begriff inertes Material" sind im Rahmen dieser Beschreibung sämtliche Materialien zu verstehen, welche bei den in der Eintrittszone (1) herrschenden Temperaturen in dem Eduktgas bzw. bei den Temperaturen an den Oberflächen der Reaktorinnenwand, vorzugsweise der Innenwand der Eintrittszone (1), keine unerwünschten Nebenreaktionen fördern. Diese Materialien können zusätzlich den Wärmetransport von der Reaktionszone (2) bzw. der Austrittszone (3) in die Eintrittszone (1) verringern. Eine bevorzugte Ausführungsform sind inerte und thermisch isolierende Materialien.

Beispiele für inerte Materialien sind Keramiken, insbesondere dichtgesinterte Keramiken, und ferner Quarzglas, Schamotte, Email und Materialien mit passivierten und/oder polierten Oberflächen, beispielsweise Metalle mit passivierten und/oder polierten Oberflächen. Eine Passivierung kann z.B. durch Behandlung mit Säuren, Laugen oder Salzlösungen bewirkt werden.

Die Erfindung betrifft auch ein Verfahren zur Durchführung katalytischer exothermer Gasphasenreaktionen unter Einsatz des oben beschriebenen Reaktors.

Das Verfahren weist folgende Maßnahmen auf:
i) Einleiten mindestens eines hinsichtlich seiner stofflichen Zusammensetzung homogenes Gasgemisches, welches mindestens ein Oxidationsmittel und mindestens eine zu oxidierende Komponente enthält, als Eduktgas durch mindestens eine Zuleitung (30) in eine Eintrittszone (1) eines Reaktors,
ii) Zuführen des Eduktgases von der Eintrittszone (1) in eine Katalysator (4) enthaltende Reaktionszone (2) unter Bedingungen, dass sich das Eduktgas in der Reaktionszone (4) in exothemer Reaktion ganz oder teilweise zu einem Produktgas umsetzt,
iii) Abführen des Produktgases durch eine Austrittszone (3) aus dem Reaktor, und
iv) Bereitstellen von Mitteln zur Verringerung des Transports von in der Reaktionszone (2) entstandenen Reaktionswärme in die Eintrittszone (1) und/oder Ausgestaltung der Innenwände des Reaktors zumindest im Bereich der Eintrittszone (1) oder im Bereich der Reaktionszone (2) aus inertem Material.

Beispiele für chemische Reaktionen, die im erfindungsgemäßen Reaktor bzw. mit dem erfindungsgemäßen Verfahren durchgeführt werden können, sind Oxidationsreaktionen aller Art einschließlich exothermer radikalischer Gasphasenreaktionen, wie Halogenierungsreaktionen.

Bevorzugt wird der erfindungsgemäße Reaktor bzw. das erfindungsgemäße Verfahren zur Oxidation von Ammoniak eingesetzt, insbesondere zur Herstellung von Caprolactam und Salpetersäure.

Ebenfalls bevorzugt wird der erfindungsgemäße Reaktor bzw. das erfindungsgemäße Verfahren für die Durchführung der Andrussow-Reaktion eingesetzt, insbesondere zur Herstellung von Cyanwasserstoff aus Ammoniak, Sauerstoff und Kohlenwasserstoffen, vorzugsweise Methan.

In der nachfolgenden Beschreibung wird die Ammoniakoxidation zur Salpetersäureherstellung beispielhaft als Modellreaktion näher dargestellt. Prinzipiell sind erfindungsgemäßer Reaktor und Verfahren - wie oben dargelegt - aber auch für andere Reaktionen geeignet.

Als Katalysatoren können alle für die betreffende Zielreaktion bzw. Zielreaktionen geeigneten Katalysatoren eingesetzt werden. Diese können z.B. in reiner Form als Vollkatalysatoren oder geträgert zum Einsatz kommen. Es können auch alle üblichen Katalysatorgeometrien verwendet werden, beispielsweise Pellets, Granulate, Extrudate oder Pulver in der Form von Schüttungen, Packungen, Netzen oder anderen Formen, wie beispielsweise in Form von monolithischen Wabenkörpern.

Bevorzugt eingesetzte Katalysatoren enthalten nennenswerte Mengen, z.B. mindestens 30 Gew. %, an Oxiden, vorzugsweise an Metalloxiden, insbesondere an Übergangsmetalloxiden.

Erfindungsgemäß können dabei insbesondere Übergangsmetalloxid enthaltende Katalysatoren eingesetzt werden, wie diese beispielsweise in Appl. Catal. General A: 204 (2000) 59-87, in US-A-5,690,900 oder in EP-A-946,290 beschrieben sind.

Besonders geeignet sind Cobalt-enthaltende Katalysatoren. Als Strukturtyp sind insbesondere Perowskite vorteilhaft.

Bevorzugt werden erfindungsgemäß für die Ammoniakoxidation Katalysatoren in Wabenform eingesetzt. Diese können z.B. als wabenförmige Vollkatalysatoren vorliegen oder geträgert in Form von wabenförmigen Trägem, auf denen und/oder in die katalytisch aktives Material eingebracht ist.

Besonders bevorzugt werden Katalysatoren eingesetzt, beispielsweise in der Form von Schüttungen, Packungen oder Waben, die in Strömungsrichtung gesehen, eine Tiefe von mindestens 3 cm, vorzugsweise mindestens 5 cm, insbesondere mindestens 10 cm und ganz besonders bevorzugt 10 bis 200 cm aufweisen.

Die nachfolgenden Beispiele und Figuren erläutern die Erfindung ohne diese dadurch zu begrenzen. Es zeigen:
- Figur 1:: Eine nicht erfindungsgemäße Vorrichtung im Längsschnitt.
- Figur 2:: Eine weitere nicht erfindungsgemäße Vorrichtung im Längsschnitt.
- Figur 3:: Eine weitere nicht erfindungsgemäße Vorrichtung im Längsschnitt.
- Figur 4:: Eine weitere nicht erfindungsgemäße Vorrichtung im Längsschnitt.
- Figur 5:: Eine weitere nicht erfindungsgemäße Vorrichtung im Längsschnitt.
- Figur 6:: Einen nicht erfindungsgemäß modifizierten Ammoniakoxidationsreaktor im Längsschnitt
- Figur 7:: Eine weitere nicht erfindungsgemäße Vorrichtung im Längsschnitt.
- Figur 8:: Eine erfindungsgemäße Vorrichtung im Längsschnitt.

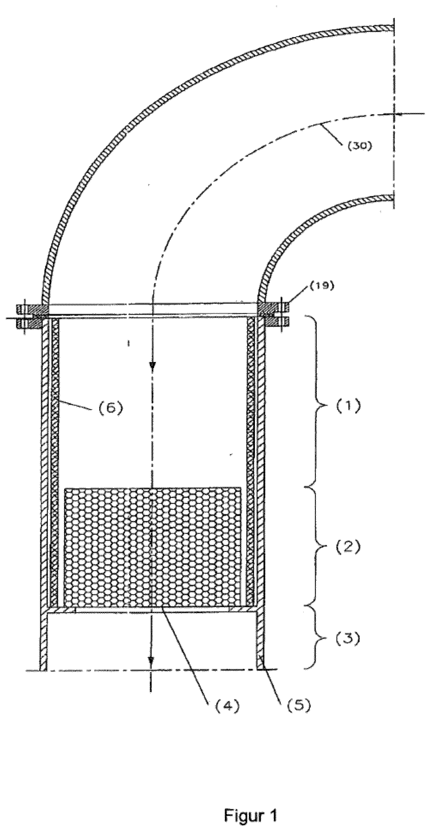

### Figuren 1 bis 7 sind Referenzfiguren.

Die Figuren werden in den folgenden Beispielen im Einzelnen beschrieben.

### Beispiel 1

In Figur 1 werden anhand einer nicht erfindungsgemäßen Ammoniakoxidationsvorrichtung die prinzipiellen Merkmale erläutert.

Eine Ammoniakoxidationsvorrichtung läßt sich in drei Zonen aufteilen, nämlich in eine Eintrittszone (1), in eine Reaktionszone (2) und in eine Austrittszone (3).

Das gut durchmischte ammoniak-/sauerstoff-/inert-haltige Gasgemisch (nachstehend "Eduktgasgemisch") wird in die Eintrittszone (1) über Zuleitung (30) eingeleitet und trifft in der sich daran anschließenden Reaktionszone (2) auf den Ammoniakoxidationskatalysator (4). Anschließend verläßt das Produktgasgemisch der Oxidationsreaktionen die Reaktionszone (2) durch die Austrittszone (3). Eintrittszone (1) ist in dieser Ausführungsform ein leerer Raum und enthält keine Packung aus inertem Material.

In der in Figur 1 dargestellten Ausführungsform sind alle drei Zonen (1, 2, 3) der erfindungsgemäßen Vorrichtung von einer Ummantelung (5) umgeben, welche zusätzlich Träger für den Katalysator (4) sowie für einen Isoliermantel (6) ist. Die Ummantelung (5) kann selbst die Wände eines Druckbehälters darstellen, oder altemativ kann die Ummantelung in einem Raum untergebracht werden, der wiederum selbst von einem in Figur 1 nicht dargestellten Druckmantel umgeben ist.

Der thermischen Entkopplung von Eintrittszone (1) und Reaktionszone (2) dient der Isoliermantel (6), der aus einem thermisch isolierenden und gasdichten Material besteht. Der Isoliermantel (6) verhindert bzw. erschwert, dass infolge von Wärmeleitung durch die Ummantelung (5) von der Reaktionszone (2) in die Eintrittszone (1) gelangende Wärme, in das Eduktgasgemisch übertragen wird. Der Teil der sich in der Eintrittszone befindenden Ummantelung (5) wird durch die Wärmeleitung der Reaktionswärme aus der Reaktionszone (2) zwar heißer, aber die Übertragung der Wärme in das Eduktgasgemisch wird durch den thermisch isolierenden Isoliermantel (6) stark gehemmt. Da der Isoliermantel (6) nur gering wärmeleitend ist, verhindert bzw. erschwert der Isoliermantel (6) auch den direkten Wärmetransport entlang des Isoliermantels (6) von der Reaktionszone (2) in die Eintrittszone (1). Durch geeignete Wahl der Materialien und der Stärke des Isoliermantels (6) bleibt die Temperatur der dem Eduktgasgemisch zugewandten Wand des Isoliermantels (6) unterhalb der Zünd- bzw. Reaktionstemperatur des Eduktgasgemisches, und unerwünschte vorzeitige Reaktionen werden unterbunden.

### Beispiel 2

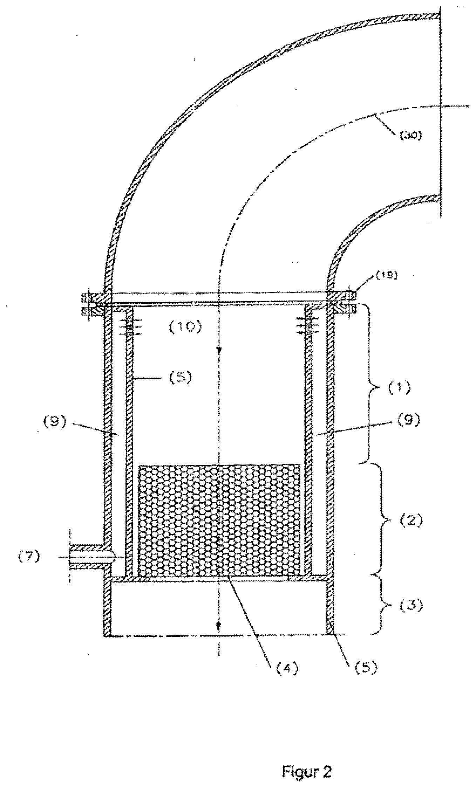

In Figur 2 ist eine weitere mögliche Ausführungsform dargestellt. Bis auf die Realisierung der thermischen Entkopplung zwischen Eintritts- und Reaktionszone (1, 2) ähnelt diese Ausführungsform der Vorrichtung des Beispiels 1.

Auch in dieser Ammoniakoxidationsvorrichtung liegen Eintrittszone (1), Reaktionszone (2) und Austrittszone (3) vor. Eintrittszone (1) ist auch in dieser Ausführungsform ein leerer Raum und enthält keine Packung aus inertem Material.

Das gut durchmischte ammoniak-/sauerstoff-/inert-haltige Gasgemisch wird über Zuleitung (30) in die Eintrittszone (1) eingeleitet. Danach trifft das Gemisch in der Reaktionszone (2) auf den Ammoniakoxidationskatalysator (4). Anschließend verläßt das Produktgemisch der Oxidationsreaktionen die Reaktionszone (2) durch die Austrittszone (3).

Die Ummantelung (5) aller drei Zonen hält den Katalysator (4). Die Ummantelung (5) kann selbst die Wände eines Druckbehälters darstellen, oder alternativ kann die Ummantelung in einem Raum untergebracht werden, der wiederum selbst von einem Druckmantel umgeben ist (hier nicht dargestellt).

In der Höhe der Eintritts- und Reaktionszone (1, 2) wird die Ummantelung (5) doppelwandig ausgeführt. An dem Ende der Doppelwand in der Höhe der Reaktionszone (2) ist ein Einlaß (7) für ein Kühlmedium angebracht, das mit dem Eduktgasgemisch, den im Reaktor gewünschten Reaktionen, dem Katalysator (4) und dem Produktgasgemisch verträglich ist. Für den Einsatz in Salpetersäureanlagen kann beispielsweise Luft als geeignetes Kühlmedium eingesetzt werden.

Das Kühlmedium fließt durch den Raum (9) in der Doppelwand und kühlt dadurch die innere Wand der Ummantelung (5). Dadurch wird eine thermische Entkopplung der Eintrittszone (1) von der Reaktionszone (2) realisiert, da die infolge von Wärmeleitung durch die Ummantelung (5) von der Reaktionszone (2) in die Eintrittszone (1) gelangende Wärme in das Kühlmedium übertragen wird.

Durch mehrere kleine Öffnungen (10) am Ende der Doppelwand in der Höhe der Eintrittszone (1) tritt das Kühlmedium in die Eintrittszone (1) ein und vermischt sich mit dem Eduktgasgemisch.

Durch geeignete Wahl der Abstände Einlaß (7) und Öffnungen (10) sowie durch geeignete Wahl von Art, Menge, Strömungsgeschwindigkeit und Eintrittstemperatur des Kühlmediums läßt sich die Temperatur im Eduktgasgemisch und an der inneren Oberfläche der Ummantelung (5) unterhalb der Zünd- bzw. Reaktionstemperatur des Eduktgasgemisches regulieren und unerwünschte vorzeitige Reaktionen werden unterbunden.

### Beispiel 3

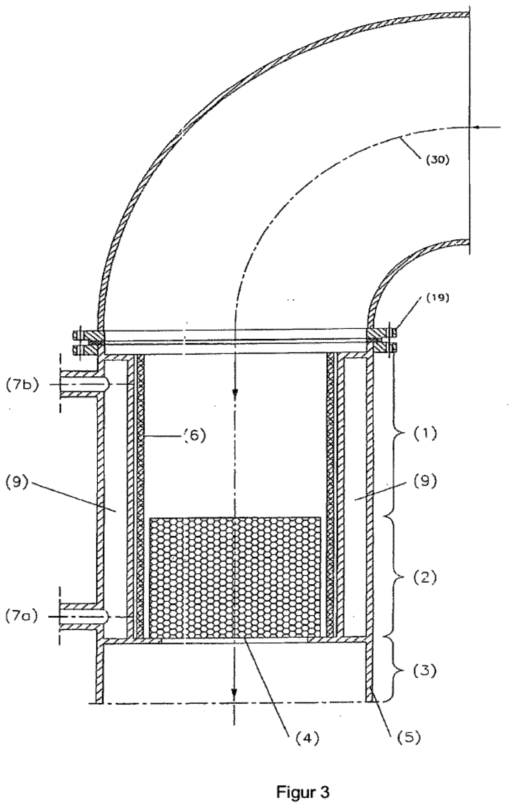

In Figur 3 ist eine nicht erfindungsgemäße Vorrichtung dargestellt, die eine besonders effektive thermische Entkopplung zwischen Eintritts- und Reaktionszone erlaubt.

Auch in dieser Ammoniakoxidationsvorrichtung liegen Eintrittszone (1), Reaktionszone (2) und Austrittszone (3) vor. Eintrittszone (1) ist in dieser Ausführungsform ein leerer Raum und enthält keine Packung aus inertem Material.

Das gut durchmischte ammoniak-/sauerstoff-inert-haltige Gasgemisch wird über Zuleitung (30) in die Eintrittszone (1) eingeleitet. Danach trifft das Gemisch auf den Ammoniakoxidationskatalysator (4) in der Reaktionszone (2). Anschließend verläßt das Produktgemisch der Oxidationsreaktionen die Reaktionszone (2) durch die Austrittszone (3).

Die Ummantelung (5) aller drei Zonen hält den Katalysator (4) und den Isoliermantel (6). Die Ummantelung (5) kann selbst die Wände eines Druckbehälters darstellen, oder alternativ kann die Ummantelung (5) in einem Raum untergebracht werden, der wiederum selbst von einem Druckmantel umgeben ist (hier nicht dargestellt).

In der Höhe der Eintritts- und Reaktionszone (1, 2) wird die Ummantelung (5) doppelwandig ausgeführt. Dort sind auch Anschlüsse (7a, 7b) für ein Kühlmedium angebracht. Geeignete Kühlmedien sind zum Beispiel Wasser oder Luft. Das Kühlmedium kann in oder gegen die Strömungsrichtung des Eduktgasgemisches fließen. Zur thermischen Entkopplung der Eintrittszone (1) von der Reaktionszone (2) dienen sowohl der Isoliermantel (6) als auch die Beaufschlagung des Raums (9) zwischen den Doppelwänden der Ummantelung (5) mit einem Kühlmedium.

Der aus einem thermisch isolierenden Material bestehende und die Ummantelung (5) in der Höhe der Reaktionszone (2) und der Eintrittszone (1) abdeckende Isoliermantel (6) verhindert, dass die infolge von Wärmeleitung durch die Ummantelung (5) von der Reaktionszone (2) in die Eintrittszone (1) gelangende Wärme, in das Eduktgasgemisch übertragen wird. Da der Isoliermantel (6) nur gering wärmeleitend ist, verhindert bzw. erschwert der Isoliermantel (6) auch den direkten Wärmetransport entlang des Isoliermantels (6) von der Reaktionszone (2) in die Eintrittszone (1).

Das Kühlmedium fließt durch den Raum (9) in der Doppelwand der Ummantelung (5) und kühlt dadurch die innere Wand der Ummantelung (5). Dadurch wird eine weitere thermische Entkopplung der Eintrittszone (1) von der Reaktionszone (2) realisiert, da die durch die Ummantelung (5) durch Wärmeleitung von der Reaktionszone (2) in die Eintrittszone (1) gelangende Wärme in das Kühlmedium übertragen wird. Nach Durchströmen der Doppelwand tritt das Kühlmedium aus dem Raum (9) zwischen den Doppelwänden durch einen der Anschlüsse (7a, 7b) wieder aus.

Dadurch wird die Wirkung des Isoliermantels (6) von der Kühlung durch das Kühlmedium unterstützt. Durch geeignete Wahl der Isoliermaterialien und deren Stärke so wie des Kühlmediums bleibt die Temperatur der dem Eduktgasgemisch gewandten Wand des Isoliermantels (6) unterhalb der Zünd- bzw. Reaktionstemperatur des Eduktgasgemisches, und unerwünschte vorzeitige Reaktionen werden unterbunden.

### Beispiel 4

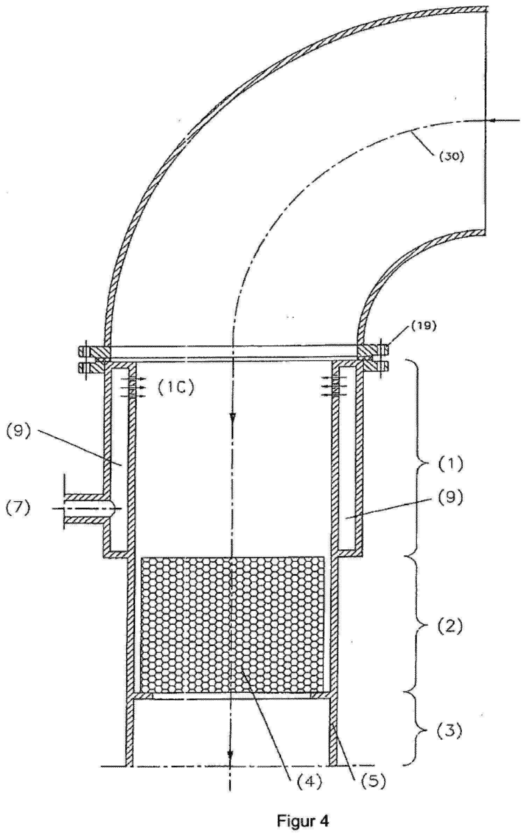

In Figur 4 ist eine ähnliche Vorrichtung wie in Figur 2 dargestellt. Hier erfolgt die thermischen Entkopplung zwischen Eintritts- und Reaktionszone (1, 2) durch Kühlen der Eintrittszone.

Auch in dieser Ammoniakoxidationsvorrichtung liegen Eintrittszone (1), Reaktionszone (2) und Austrittszone (3) vor. Eintrittszone (1) ist in dieser Ausführungsform ein leerer Raum und enthält keine Packung aus inertem Material.

Das gut durchmischte ammoniak-/sauerstoff-inert-haltige Gasgemisch wird über Zuleitung (30) in die Eintrittszone (1) eingeleitet. Danach trifft das Gemisch in der Reaktionszone (2) auf den Ammoniakoxidationskatalysator (4). Anschließend verläßt das Produktgemisch der Oxidationsreaktionen die Reaktionszone (2) durch die Austrittszone (3).

Die Ummantelung (5) aller drei Zonen hält den Katalysator (4). Die Ummantelung (5) kann selbst die Wände eines Druckbehälters darstellen, oder alternativ kann die Ummantelung in einem Raum untergebracht werden, der wiederum selbst von einem Druckmantel umgeben ist (hier nicht dargestellt).

In der Höhe der Eintrittszone (1) wird die Ummantelung (5) doppelwandig ausgeführt. An dem Ende der Doppelwand in der Nähe der Reaktionszone (2) ist ein Einlaß (7) für ein Kühlmedium angebracht, das mit dem Eduktgasgemisch, den im Reaktor gewünschten Reaktionen, dem Katalysator (4) und dem Produktgasgemisch verträglich ist. Für den Einsatz in Salpetersäureanlagen kann beispielsweise Luft als geeignetes Kühlmedium eingesetzt werden.

Das Kühlmedium fließt durch den Raum (9) in der Doppelwand und kühlt dadurch die innere Wand der Ummantelung (5) in der Höhe der Eintrittszone (1). Dadurch wird eine thermische Entkopplung der Eintrittszone (1) von der Reaktionszone (2) realisiert, da die infolge von Wärmeleitung durch die Ummantelung (5) von der Reaktionszone (2) in die Eintrittszone (1) gelangende Wärme, in das Kühtmedium übertragen wird.

Durch mehrere kleine Öffnungen (10) am gegen die Strömungsrichtung des Eduktgases gelegenen Ende der Doppelwand tritt das Kühlmedium in die Eintrittszone (1) ein und vermischt sich mit dem Eduktgasgemisch.

Durch geeignete Wahl der Abstände Einlaß (7) und Öffnungen (10) sowie durch geeignete Wahl von Art, Menge, Strömungsgeschwindigkeit und Eintrittstemperatur des Kühlmediums läßt sich die Temperatur im Eduktgasgemisch und an der inneren Oberfläche der Ummantelung (5) unterhalb der Zünd- bzw. Reaktionstemperatur des Eduktgasgemisches regulieren und unerwünschte vorzeitige Reaktionen werden unterbunden.

### Beispiel 5

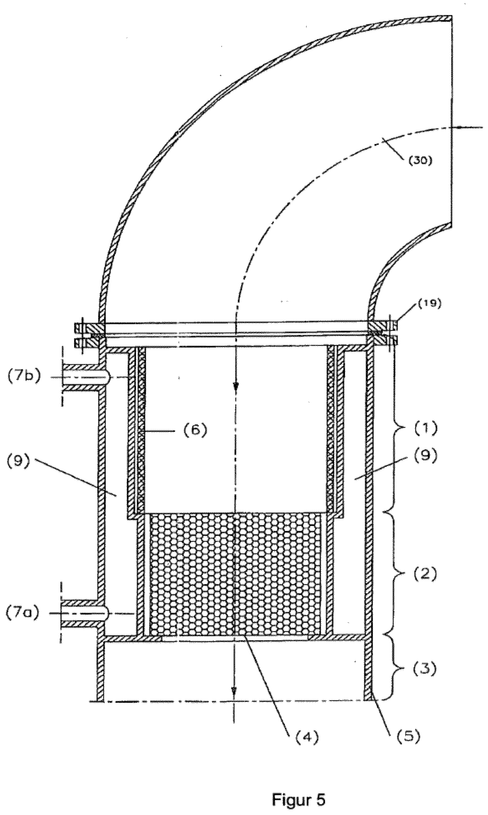

In Figur 5 ist eine ähnliche Vorrichtung wie in Figur 3 dargestellt. Hier verläuft allerdings der Isoliermantel (6) nur in Höhe der Eintrittszone (1).

Auch in dieser Ammoniakoxidationsvorrichtung liegen Eintrittszone (1), Reaktionszone (2) und Austrittszone (3) vor. Eintrittszone (1) ist in dieser Ausführungsform ein leerer Raum und enthält keine Packung aus inertem Material.

Das gut durchmischte ammoniak-/sauerstoff-/inert-haltige Gasgemisch wird über Zuleitung (30) in die Eintrittszone (1) eingeleitet. Danach trifft das Gemisch auf den Ammoniakoxidationskatalysator (4) in der Reaktionszone (2). Anschließend verläßt das Produktgemisch der Oxidationsreaktionen die Reaktionszone (2) durch die Austrittszone (3).

Die Ummantelung (5) aller drei Zonen hält den Katalysator (4) und den Isoliermantel (6). Die Ummantelung (5) kann selbst die Wände eines Druckbehälters darstellen, oder alternativ kann die Ummantelung (5) in einem Raum untergebracht werden, der wiederum selbst von einem Druckmantel umgeben ist (hier nicht dargestellt).

In der Höhe der Eintritts- und Reaktionszone (1, 2) wird die Ummantelung (5) doppelwandig ausgeführt. Dort sind auch Anschlüsse (7a, 7b) für ein Kühlmedium angebracht. Das Kühlmedium kann in oder gegen die Strömungsrichtung des Eduktgasgemisches fließen. Zur thermischen Entkopplung der Eintrittszone (1) von der Reaktionszone (2) dienen sowohl der Isoliermantel (6) als auch die Beaufschlagung des Raums (9) in der Doppelwand der Ummantelung (5) mit einem Kühlmedium.

Der aus einem thermisch isolierenden Material bestehende und die Ummantelung (5) in der Höhe der Eintrittszone (1) abdeckende Isoliermantel (6) verhindert, dass die infolge von Wärmeleitung durch die Ummantelung (5) von der Reaktionszone (2) in die Eintrittszone (1) gelangende Wärme in das Eduktgasgemisch übertragen wird. Da der Isoliermantel (6) nur gering wärmeleitend ist, verhindert bzw. erschwert der Isoliermantel (6) auch den direkten Wärmetransport entlang des Isoliermantels (6) von der Reaktionszone (2) in die Eintrittszone (1).

Das Kühlmedium fließt durch den Raum (9) in der Doppelwand der Ummantelung (5) und kühlt dadurch die innere Wand der Ummantelung (5). Dadurch wird eine weitere thermische Entkopplung der Eintrittszone (1) von der Reaktionszone (2) realisiert, da die durch die Ummantelung (5) durch Wärmeleitung von der Reaktionszone (2) in die Eintrittszone (1) gelangende Wärme in das Kühlmedium übertragen wird. Nach Durchströmen der Doppelwand tritt das Kühlmedium aus dem Raum (9) in der Doppelwand durch einen der Anschlüsse (7a, 7b) wieder aus.

Die Wirkung des Isoliermantels (6) wird von der Kühlung durch das Kühlmedium unterstützt. Durch geeignete Wahl der Isoliermaterialien und deren Stärke sowie des Kühlmediums bleibt die Temperatur der dem Eduktgasgemisch gewandten Wand des Isoliermantels (6) unterhalb der Zünd- bzw. Reaktionstemperatur des Eduktgasgemisches, und unerwünschte vorzeitige Reaktionen werden unterbunden.

### Beispiel 6

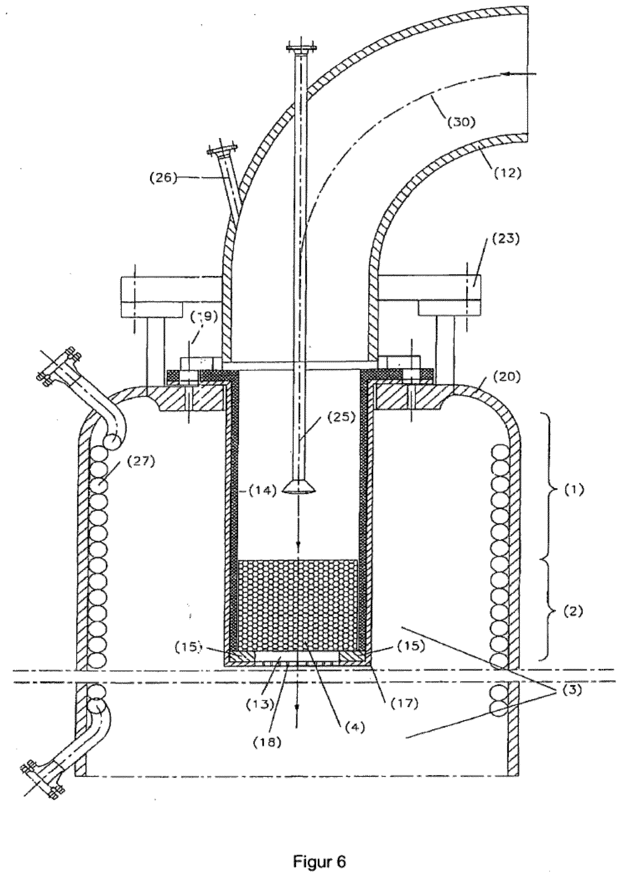

Diese Ausführungsform ist vorwiegend geeignet, die bestehende Haube eines konventionellen Ammoniakoxidationsreaktors zu ersetzen. In Figur 6 ist ein nicht erfindungsgemäßer Ammoniakoxidationsreaktor gezeigt.

Ein gut durchmischtes sauerstoff-/ammoniak-inert-haltiges Eduktgasgemisch tritt über Zuleitung (30) in die Vorrichtung ein. Das Gemisch wird über einen Ammoniakoxidationskatalysator (4) geleitet, der hier wabenförmig ausgestaltet ist oder sich auf und/oder in einem wabenförmigen Träger befindet. Dort wird das Ammoniak durch Reaktion mit einem Teil des Sauerstoffs im Eduktgasgemisch zu Stickstoffmonoxid umgesetzt. Durch die exotherme Reaktion findet eine Temperaturerhöhung im Ammoniakoxidationskatalysator (4) statt, der sich in der Reaktionszone (2) befindet. Das heiße Produktgemisch tritt durch Öffnung (13) hinter dem Ammoniakoxidationskatalysator (4) in einen Raum (3) ein, welcher die Austrittszone darstellt. Im Anschluß an diesen Raum (3) wird das heiße Produktgas in eine hier nicht dargestellte Gasturbine oder einen oder mehrere hier nicht dargestellten Wärmeaustauscher zur Rückgewinnung von Energie oder zur anderweitigen Verwendung der Prozesswärme geleitet.

Um die thermische Entkopplung der Edukt-Zufuhrseite von der Reaktionszone (2) zu realisieren, wird der Ammoniakoxidationskatalysator (4) in eine aus temperaturbeständigem thermisch isolierendem Material, beispielsweise aus Keramik oder Quarzglas, gefertigte Hülse (14) eingesetzt. Hierdurch werden eventuelle Vorzündungen des Eduktgasgemisches unterbunden. Der Ammoniakoxidationskatatysator (4) sitzt dabei lose in der Hülse (14) und ruht auf einem Stützring (15) und - bei einem mehrteiligen Katalysator (4) - mehreren nicht dargestellten Stützbalken aus temperaturbeständigem Material, beispielsweise Keramik oder Quarzglas. Der Stützring (15) verhindert einen eventuellen Gasbypass. Die Stützbalken, falls installiert, sind so ausgeführt, dass sie nur einen unwesentlichen Anteil des Strömungsquerschnitts versperren.

Zur Unterstützung und zum Schutz der Hülse (14) ist diese mit einer Metallhülse (16) aus hochtemperaturbeständigem Material ummantelt. Das untere Ende der Metallhülse (16) ist mit einer Lippe (17) versehen, welche den Stützbalken bzw. Stützring (15) und damit indirekt auch den Katalysator (4) unterstützt. Am unteren Ende der Metallhülse (16) ist ein Gitterrost (18) angebracht, durch den das Produktgas aus dem Ammoniakoxidationskatalysator (4) in den Raum (3) fließt. Der Gitterrost (18) dient der mechanischen Stabilisierung der Metallhülse (16) und der Unterstützung etwaiger Stützbalken. Für den Fall, dass der Ammoniakoxidationskatalysator (4) nicht nur aus einem Teil besteht, sondern aus mehreren Teilen zusammengesetzt ist, dient der Gitterrost (18) dazu, die einzelnen Teile über den Stützbalken zu unterstützen. Falls die Hülse (14) unvorhergesehener Weise brechen sollte, etwa wegen thermischer Belastung, verhindern Metallhülse (16), Lippe (17) und Gitterrost (18) außerdem ein Herunterfallen von Hülse (14) und Ammoniakoxidationskatalysator (4) in den Raum (3).

Hülse (14) und Metallhülse (16) sind mit Bolzen und Muttern (19) mit dem Druckmantel (20) des Ammoniakoxidationsreaktors verbunden. Der Druckraum wird nach außen durch einen am Behälter angebrachten Druckflansch (23) abgeschlossen.

Zum Katalysatorwechsel wird durch Lösen der Schraubverbindungen der Stutzen (12) entfernt. Anschließend werden die Muttern bzw. Bolzen (19) gelöst und die Metall- und Keramik- bzw. Quarzglashülse (16, 14) samt Ammoniakoxidationskatalysator (4) aus dem Reaktor entfernt. Um die Dauer des Anlagestillstandes zu minimieren (auch gegenüber einem konventionellen Ammoniakoxidationsreaktor), kann eine zweite vor dem Stillstand bereitgestellte aus Metall- und Keramik- bzw. Quarzglashülsen (16, 14) und neuem Ammoniakoxidationskatalysator (4) bestehende Einheit sofort in den Reaktor installiert werden.

Um bei Bedarf die Ammoniakoxidationsreaktion während der Inbetriebnahme zu unterstützen, kann der Ammoniakoxidationskatalysator (4) über eine Zündlanze (25) vorgeheizt bzw. aktiviert werden. Die Zündlanze (25) besteht aus einem dünnen Rohr, durch welches Wasserstoff in den Ammoniakoxidationsreaktor geleitet wird, und aus einer Vorrichtung, welche den Wasserstoffstrom am offenen Ende der Zündlanze zum Zünden bringen kann.

Der Kontrolle des Zündvorgangs und der Überprüfung des Zustands des Ammoniakoxidationskatalysators (4) während des Betriebs dient das im Krümmer des Ammoniakoxidationsreaktors montierte Schauglas (26). Die Kontrolle kann manuell nach Augenschein oder mit Hilfe von entsprechenden Messeinrichtungen wie Photometer erfolgen.

Um die Temperaturbelastung am Material der Wand des Druckbehälters im Raum (3) nach dem Ammoniakoxidationskatalysator (4) zu mildem, wird die Wand mit einer auf der Innenseite angebrachten Flossenrohrkühlung (27) versehen. Durch die Rohre der Flossenwand fließt Wasser oder ein anderes Kühlmedium.

### Beispiel 7

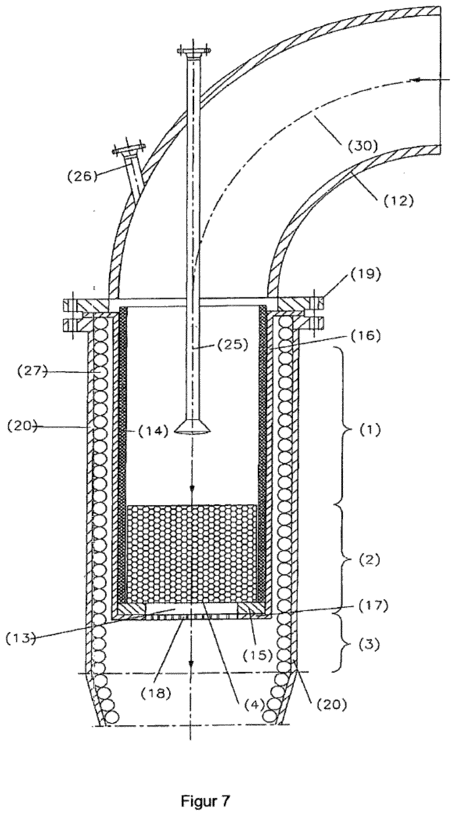

Diese in Figur 7 dargestellte Ausgestaltung eines nicht erfindungsgemäßen Ammoniakoxidationsreaktors ist besonders gut dafür geeignet, neue Anlagen zur Herstellung von NO auszurüsten, da die Notwendigkeit einer Anpassung an den Durchmesser eines bereits vorhanden Wärmerückgewinnungsapparates, wie z.B. eines Dampfkessels, nicht mehr gegeben ist.

Der prinzipielle Unterschied zum Reaktor des Beispiels 6 liegt darin, dass die Flossenwand (27) sich an die Metallhülse (16) anschmiegt und somit eine Anpassung an den in der Regel größeren Durchmesser eines nachgeschalteten Apparates nicht erforderlich ist. Bei dieser Ausführungsform können die nachgeschalteten Apparate dem Ammoniakoxidationsreaktor angepaßt werden. Als Alternative zur dargestellten Aufhängung der Metallhülse (16) kann die für die Unterstützung des Katalysators (4) vorgesehene Metalllippe (17) direkt an der Flossenwand (27) angebracht werden, anstatt an der Metallhülse (16). Das wirkt sich positiv auf die mechanische Stabilität der Konstruktion aus.

Die übrigen in Figur 7 dargestellten Elemente entsprechen den Elementen der Figur 6. Dabei handelt es sich um Öffnung (13), Stützring (15), Gitterrost (18), Bolzen und Muttern (19), Druckmantel (20), Zündlanze (25) und Schauglas (26).

### Beispiel 8

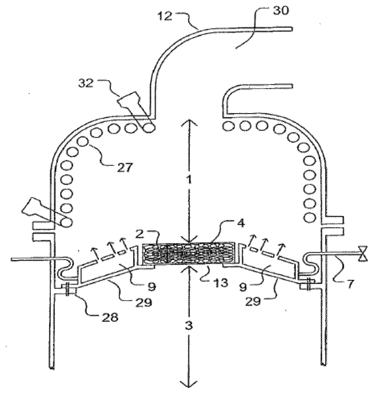

In Figur 8 ist ein erfindungsgemäßer Ammoniakoxidationsreaktor gezeigt. Diese Ausführungsform ist vorwiegend geeignet, einen bestehenden konventionellen Ammoniakoxidationsreaktor nach Entfernung der Pt-/Rh-Netze mit einem neuen Katalysator auszurüsten.

Ein sauerstoff-/ammoniak-/inerthaltiges Gemisch tritt über die Zuleitung (30) in die erfindungsgemäße Vorrichtung ein. Das Gemisch wird über einen Ammoniakoxidationskatalysator (4) geleitet, der hier wabenförmig ausgestaltet ist oder sich auf und/oder in einem wabenförmigen Träger befindet. Dort wird das Ammoniak durch Reaktion mit einem Teil des Sauerstoffs im Eduktgemisch zu Stickstoffmonoxid umgesetzt. Durch die exotherme Reaktion findet eine Temperaturerhöhung im Ammoniakoxidationskatalysator (4) statt, der sich in der Reaktionszone (2) befindet. Das heiße Produktgemisch tritt durch Öffnung (13) hinter dem Ammoniakoxidationskatalysator (4) in einen Raum ein, welcher die Austrittszone (3) darstellt. Im Anschluss an diesen Raum wird das heiße Produktgas in eine hier nicht dargestellte Gasturbine oder einen oder mehrere hier nicht dargestellten Wärmeaustauscher zur Rückgewinnung von Energie oder zur anderweitigen Verwendung der Prozesswärme geleitet.

Der Katalysator wird in einer hochtemperaturbeständigen Unterstützung (29) untergebracht. Diese Unterstützung (29) liegt wiederum gasdicht auf einem mit dem Behälterwand verbundenen Stutzring (28).

Um die notwendige thermische Entkopplung der Edukt-Zufuhrseite von der Reaktionszone (2) und in diesem Fall auch von der Austrittszone (3) zu realisieren, wird die hochtemperaturbeständige Unterstützung (29), in welcher der Ammoniakoxidationskatalysator (4) untergebracht ist, mit einem oder mehreren Hohlräumen (9) ausgestattet, durch welche ein in die Einlässe (7) eingespeistes Kühlmedium fließt. Dabei ist das verwendete Kühlmedium mit dem Eduktgasgemisch, den im Reaktor gewünschten Reaktionen, dem Katalysator (4) und dem Produktgasgemisch verträglich. Für den Einsatz in Salpetersäureanlagen kann beispielsweise Luft als geeignetes Kühlmedium eingesetzt werden. Das Kühlmedium fließt durch den oder die Räume (9) in der Unterstützung (29) und kühlt dadurch die Wände derselben auf beiden Seiten. Dadurch wird eine thermische Entkopplung der Eintrittszone (1) von der Reaktionszone (2) und von der Austrittszone (3) realisiert, da die Wärmeleitung von der Reaktionszone (2) entlang der Unterstützung (29) in die Eintrittszone (1) durch die Kühlung der Unterstützung (29) unterdrückt wird. Die Kühlung unterdrückt auch den Wärmefluss durch die Unterstützung (29) von der Austrittszone (3) in die Eintrittszone (1).

Durch mehrere kleine Öffnungen (10) in der Oberseite der Unterstützung tritt das Kühlmedium in die Eintrittszone (1) ein und vermischt sich mit dem Eduktgasgemisch.

Durch geeignete Wahl der Abstände zwischen Einlässen (7) und Öffnungen (10) sowie durch geeignete Wahl von Art, Menge, Strömungsgeschwindigkeit und Eintrittstemperatur des Kühlmediums lässt sich die Temperatur an der der Eintrittszone (1) zugewandten Seite der Unterstützung (29) unterhalb der Zünd- bzw. Reaktionstemperatur des Eduktgasgemisches regulieren, und unerwünschte vorzeitige Reaktionen werden unterbunden.

Um die Temperatur an der Innenwand der Haube in der Eintrittszone (1) unterhalb der Zünd- bzw. Reaktionstemperatur des Eduktgasgemisches zu regulieren, wird die Wand mit einer auf der Innenseite angebrachten Flossenrohrkühlung (27) versehen. Durch die Rohre der Flossenwand fließt Wasser oder ein anderes Kühlmedium, wobei das Kühlmedium in die Wandkühlung über den Einlass (31) eintritt und die Wandkühlung über den Auslass (32) verlässt.

### Vergleichsbeispiele 9a bis 9c und Referenzbeispiel 9d

Bei einem Test mit Übergangsmetalloxid-Wabenkatalysatoren zur NH₃-Oxidation, bei welchem versucht wurde, abweichend von der sonst üblichen Katalysatordimensionierung, die Anströmung auf eine geringer Anströmfläche bei vergleichsweise großer Tiefe des Katalysatorbettes (5 cm) zu fokussieren, wurde im Versuchsreaktor unter atmosphärischen Bedingungen bei einer Lineargeschwindigkeit von 1,0 m/s eine nur geringe Selektivität bezüglich der NOₓ-Bildung gefunden.

Auch eine Erhöhung der Lineargeschwindigkeit auf 2,0 m/s führte nur zu einer unzureichenden Verbesserung der NOₓ-Selektivität. Die Ergebnisse sind in der folgenden Tabelle 1 dargestellt.

**Tabelle 1**

| Beispiel Nr. | Lineargeschwindigkeit | Raumgeschwindigkeit | NHr Umsatz | NH₃-Eingangskonzentration | NOₓ-Selektivität | Reaktormaterial |
|---|---|---|---|---|---|---|
| 9a | 1,0 m/s | 10.000 h⁻¹ | ∼100% | 1 0% | 47% | Edelstahl |
| 9b | 2,0 m/s | 20.000 h⁻¹ | ∼100% | 10% | 59% | Edelstahl |
| 9c | 1,0 m/s | 10.000 h⁻¹ | ∼100% | 1% | 38% | Edelstahl |
| 9d | 1,0 m/s | 10.000 h⁻¹ | ∼100% | 1% | 100% | Quarzglas |

### Durchführung der Versuche

Ein Vollwabenkatalysator (200 csi (31 Zellen pro cm²), Länge 5 cm, Durchmesser 1,8 cm) bestehend aus LaCoO₃-Perowskit, welcher in einem rohrförmigen Reaktor aus Edelstahl bzw. aus Quarzglas eingesetzt war, wurde mit einem Gemisch aus 10% bzw. 1 % Ammoniak in Luft durchströmt. Das Reaktorrohr war in einem Röhrenofen positioniert, mit dessen Hilfe mögliche Wärmeverluste ausgeglichen werden konnten. Die Temperaturregelung erfolgte über ein Thermoelement, welches ca. 0,5 cm unterhalb der Katalysatorwabe (austrittsseitig) angeordnet war. Die Austrittstemperatur betrug einheitlich 900°C.

Die Zusammensetzung des ein- und austretenden Gasstromes wurde mit Hilfe eines FTIR-Analysators (Modell Avatar Fa. Nicolet) mit Gasküvette untersucht.

Der in Tabelle 1 in Versuchen 9a bis 9c dargestellte Befund kann damit erklärt werden, dass ein signifikanter Anteil des zugeführten NH₃ vor Eintritt in die Katalysatorzone in N₂ und H₂O zersetzt wurde, wie durch ein entsprechendes Experiment im leeren Reaktorrohr bestätigt wurde. Dabei wurde in dem von außen beheizten Reaktionsrohr auch ohne Anwesenheit des Wabenkatalysators bei einer Lineargeschwindigkeit von 1,0 m/s ein vollständiger Umsatz an NH₃ registriert, welcher im wesentlichen zur Bildung von N₂ und H₂O führte.

Führt man den Versuch gemäß Beispiel 9c in einem Reaktor aus Quarzglas durch, welcher ein thermischer Isolator ist und zugleich inert ist, so stellt man überraschend fest, dass sich die NOₓ-Selektivität drastisch erhöht (vergl. nicht erfindungsgemäßes Beispiel 9d).

## Patentansprüche

1. Reaktor für katalytische, exotherme Gasphasenreaktionen durch Umsetzung eines Eduktgases zu einem Produktgas mit in Strömungsrichtung des Eduktgases gesehen
- einer Eintrittszone (1),
- einer mindestens einen Katalysator (4) enthaltenden Reaktionszone (2), wobei die Reaktionszone (2) nur einen Teil des Querschnitts des Reaktors ausfüllt,
- einer Austrittszone (3) für das Produktgas,
wobei
- der Eintrittszone (1), welche ein leerer Raum ist oder ein Raum ist, der funktionelle Einbauten aufweist, welche nicht der Durchmischung dienen, über mindestens eine Zuleitung (30) ein hinsichtlich seiner stofflichen Zusammensetzung homogenes Gasgemisch, welches mindestens ein Oxidationsmittel, mindestens eine zu oxidierende Komponente und mindestens eine für die miteinander reagierenden Stoffe inerte Substanz enthält, als Eduktgas zugeführt wird,
- die Zuleitung (30) mit einem oder mehreren Mischaggregaten zur Mischung des Oxidationsmittels, der zu oxidierenden Komponente und der inerten Substanz verbunden ist, und
- als Mittel zur Verringerung des Transports von in der Reaktionszone (2) erzeugter Wärme in die Eintrittszone (1) eine Vorrichtung (9) zum Durchleiten eines Kühlmediums vorgesehen ist, wobei die Vorrichtung (9) zum Durchleiten eines Kühlmediums eine von einem Kühlmedium durchströmte Unterstützung (29) für den Katalysator (4) ist, welche Eintrittszone (1) und Austrittszone (3) trennt.

2. Reaktor nach Anspruch 1, **dadurch gekennzeichnet, dass** die Eintrittszone (1) keine Einbauten zur Durchmischung des homogenen Gasgemisches aufweist, insbesondere keine inerten Packungen zur Mischung oder Dispersion des homogenen Gasgemisches.

3. Reaktor nach einem der Ansprüche 1 bis 2, **dadurch gekennzeichnet, dass** die Innenwände des Reaktors zumindest im Bereich der Eintrittszone (1) oder im Bereich der Reaktionszone (2) aus inertem Material ausgestaltet sind, wobei das inerte Material ausgewählt wird aus der Gruppe der Keramiken, Quarzglas, Schamotte, Email und Materialien mit passivierten und/oder polierten Oberflächen, insbesondere der Metalle mit passivierten und/oder polierten Oberflächen.

4. Reaktor nach Anspruch 1, **dadurch gekennzeichnet, dass** Eintrittszone (1), Reaktionszone (2) und Austrittszone (3) von einer Reaktorummantelung (5) umgeben sind, welche zusätzlich Träger für den Katalysator (4) sowie für einen Isoliermantel (6) ist, der den Innenraum des Reaktors im Bereich zumindest eines Teils der Eintrittszone (1) oder im Bereich der Reaktionszone (2) und zumindest eines Teils der Eintrittszone (1) thermisch von der Reaktorummantelung (5) isoliert und so die Übertragung von Wärme aus der Reaktionszone (2) in das Eduktgas in der Eintrittszone (1) hemmt.

5. Reaktor nach Anspruch 1, **dadurch gekennzeichnet, dass** Eintrittszone (1), Reaktionszone (2) und Austrittszone (3) von einer in der Höhe der Eintrittszone (1) oder in der Höhe der Eintrittszone (1) und der Reaktionszone (2) doppelwandig ausgeführten Reaktorummantelung (5) umgeben sind, und dass an mindestens einem Ende der doppelwandigen Reaktorummantelung ein Anschluss (7) für ein Kühlmedium zum Einleiten in den durch die doppelwandige Reaktorummantelung gebildeten Raum (9) vorgesehen ist, zur Kühlung der inneren Wand der Reaktorummantelung (5).

6. Reaktor nach Anspruch 5, **dadurch gekennzeichnet, dass** in der Innenwand der doppelwandigen Reaktorummantelung (5) mindestens eine Öffnung (10) vorgesehen ist, durch welche das Kühlmedium in die Eintrittszone (1) eintritt und sich mit dem Eduktgas vermischt.

7. Reaktor nach einem der Ansprüche 4 bis 6, **dadurch gekennzeichnet, dass** die Reaktorummantelung (5) als Wand eines Druckbehälters ausgestaltet ist oder in einem Raum untergebracht ist, der von einem Druckmantel umgeben ist.

8. Reaktor nach Ansprüchen 4 bis 7, **dadurch gekennzeichnet, dass** neben dem mindestens einen Isoliermantel (6) mindestens eine doppelwandig ausgeführte Reaktorummantelung (5) vorgesehen ist, welche zusätzlich Träger für den Katalysator (4) ist, und die mindestens einen Anschluss (7) für ein Kühlmedium aufweist.

9. Reaktor nach Anspruch 1, **dadurch gekennzeichnet, dass** dieser eine aus temperaturbeständigem und thermisch isolierendem Material gefertigte Hülse (14) aufweist, in die der Katalysator (4) eingesetzt ist.

10. Reaktor nach einem der Ansprüche 1 bis 9, **dadurch gekennzeichnet, dass** der Katalysator (4) in Form einer Wabe ausgebildet ist oder auf und/oder in einem wabenförmig ausgestalteten Trägermaterial angebracht ist.

11. Reaktor nach einem der Ansprüche 1 bis 10, **dadurch gekennzeichnet, dass** der Katalysator (4) mindestens 30 Gew. % Oxide enthält, vorzugsweise Metalloxide, insbesondere Übergangsmetalloxide.

12. Reaktor nach einem der Ansprüche 1 bis 9 und 11, **dadurch gekennzeichnet, dass** der Katalysator in Form einer Schüttung oder Packung vorliegt mit einer in Strömungsrichtung gesehenen Tiefe von mindestens 3 cm.

13. Verfahren zur Durchführung katalytischer, exothermer Gasphasenreaktionen unter Einsatz des Reaktors nach Anspruch 1 mit den Maßnahmen:
i) Einleiten mindestens eines hinsichtlich seiner stofflichen Zusammensetzung homogenen Gasgemisches, welches mindestens ein Oxidationsmittel, mindestens eine zu oxidierende Komponente und mindestens eine für die miteinander reagierenden Stoffe inerte Substanz enthält, als Eduktgas durch mindestens eine Zuleitung (30), die mit einem oder mehreren Mischaggregaten zur Mischung des Oxidationsmittels, der zu oxidierenden Komponente und der inerten Substanz verbunden ist, in eine Eintrittszone (1) eines Reaktors, wobei die örtlichen Konzentrationen der Komponenten im Eduktgas Variationskoeffizienten von kleiner gleich 0,1 aufweisen, wobei der Variationskoeffizient der örtlichen Konzentration eines Stoffes das Verhältnis der Standardabweichung der örtlichen Stoffkonzentration zum Mittelwert der örtlichen Stoffkonzentration ausdrückt,
ii) Zuführen des Eduktgases von der Eintrittszone (1) in eine Katalysator (4) enthaltende Reaktionszone (2) unter Bedingungen, dass sich das Eduktgas in der Reaktionszone (2) in exothermer Reaktion ganz oder teilweise zu einem Produktgas umsetzt,
iii) Abführen des Produktgases durch eine Austrittszone (3) aus dem Reaktor, und
iv) Bereitstellen einer Vorrichtung zum Durchleiten eines Kühlmediums als Mittel zur Verringerung des Transports von in der Reaktionszone (2) entstandener Reaktionswärme in die Eintrittszone (1), wobei die Vorrichtung zum Durchleiten eines Kühlmediums eine von einem Kühlmedium durchströmte Unterstützung für den Katalysator (4) ist, welche Eintrittszone (1) und Austrittszone (3) trennt.

14. Verfahren nach Anspruch 13, **dadurch gekennzeichnet, dass** die örtlichen Konzentrationen der Komponenten im Eduktgas Variationskoeffizienten von kleiner als 0,05, besonders bevorzugt von kleiner als 0,03, wobei der Variationskoeffizient der örtlichen Konzentrationen eines Stoffes das Verhältnis der Standardabweichung der örtlichen Stoffkonzentrationen zum Mittelwert der örtlichen Stoffkonzentrationen ausdrückt.

15. Verfahren nach einem der Ansprüche 13 bis 14, **dadurch gekennzeichnet, dass** als Eduktgas ein Ammoniak und Sauerstoff enthaltendes Gasgemisch verwendet wird.

16. Verfahren nach einem der Ansprüche 13 bis 15, **dadurch gekennzeichnet, dass** ein in Wabenform ausgestalteter Katalysator eingesetzt wird.

17. Verfahren nach einem der Ansprüche 13 bis 16, **dadurch gekennzeichnet, dass** ein der Katalysator mindestens 30 Gew. % Oxide enthält, vorzugsweise Metalloxide, insbesondere Übergangsmetalloxide, eingesetzt wird.

18. Verfahren nach einem der Ansprüche 13 bis 16, **dadurch gekennzeichnet, dass** ein Katalysator in Form einer Katalysatorschüttung oder einer Katalysatorpackung eingesetzt wird, der eine in Strömungsrichtung gesehene Tiefe von mindestens 3 cm aufweist.

19. Verwendung des Reaktors nach einem der Ansprüche 1 bis 12 zur Ammoniakoxidation.

20. Verwendung nach Anspruch 19, **dadurch gekennzeichnet, dass** der Reaktor in eine Anlage zur Herstellung von Caprolactam oder von Salpetersäure integriert ist.

## Claims

1. Reactor for catalytic, exothermic gas phase reactions by conversion of a feed gas to a product gas having, seen in the flow direction of the feed gas,
- an entry zone (1),
- a reaction zone (2) comprising at least one catalyst (4), wherein the reaction zone (2) fills only part of the reactor cross section,
- an exit zone (3) for the product gas,
where
- a homogeneous gas mixture with respect to its substance composition, which contains at least one oxidant, at least one component to be oxidized and at least one substance which is inert to the substances reacting with one another, is supplied as feed gas to the entry zone (1), which is an empty space or is a space that contains functional fittings which do not serve for intermixing, by at least one feed line (30),
- the feed line (30) is connected to one or more mixing units for mixing of the oxidant, the component to be oxidized and the inert substance, and
- as means for decreasing the transport of heat produced in the reaction zone (2) into the entry zone (1) a device (9) for leading through a cooling medium is provided, wherein the device (9) for leading through a cooling medium is a support (29), which is flowed through by a cooling medium, for the catalyst (4), which support separates entry zone (1) and exit zone (3).

2. Reactor according to Claim 1, **characterized in that** the entry zone (1) contains no fittings for intermixing the homogeneous gas mixture, in particular no inert packings for mixing or dispersion of the homogeneous gas mixture.

3. Reactor according to one of Claims 1 to 2, **characterized in that** the inner walls of the reactor at least in the area of the entry zone (1) or in the area of the reaction zone (2) are formed from inert material, wherein the inert material is selected from the group of ceramics, quartz glass, chamotte, enamel and materials with passivated and/or polished surfaces, in particular of metals with passivated and/or polished surfaces.

4. Reactor according to Claim 1, **characterized in that** entry zone (1), reaction zone (2) and exit zone (3) are surrounded by a reactor jacketing (5), which additionally is a carrier for the catalyst (4) and for an insulating jacket (6) that insulates the inner space of the reactor in the area at least of a part of the entry zone (1) or in the area of the reaction zone (2) and at least of a part of the entry zone (1) thermally from the reactor jacketing (5) and thus inhibits the transmission of heat from the reaction zone (2) to the feed gas in the entry zone (1).

5. Reactor according to Claim 1, **characterized in that** entry zone (1), reaction zone (2) and exit zone (3) are surrounded by a reactor jacketing (5) designed to be double-walled at the level of the entry zone (1) or at the level of the entry zone (1) and the reaction zone (2), and **characterized in that** on at least one end of the double-walled reactor jacketing a connection (7) for a cooling medium for introduction into the space (9) formed by the double-walled reactor jacketing is provided, for cooling the inner wall of the reactor jacketing (5).

6. Reactor according to Claim 5, **characterized in that** in the inner wall of the double-walled reactor jacketing (5) at least one opening (10) is provided through which the cooling medium enters into the entry zone (1) and mixes with the feed gas.

7. Reactor according to one of Claims 4 to 6, **characterized in that** the reactor jacketing (5) is formed as a wall of a pressure container or is accommodated in a space that is surrounded by a pressure jacket.

8. Reactor according to Claims 4 to 7, **characterized in that** in addition to the at least one insulating jacket (6) at least one reactor jacketing (5) designed to be double-walled is provided, which additionally is a carrier for the catalyst (4), and which has at least one connection (7) for a cooling medium.

9. Reactor according to Claim 1, **characterized in that** this has a sheath (14) manufactured from temperature-resistant and thermally insulating material, into which the catalyst (4) is inserted.

10. Reactor according to one of Claims 1 to 9, **characterized in that** the catalyst (4) is designed in the form of a honeycomb or is applied to and/or on a carrier material formed in honeycomb form.

11. Reactor according to one of Claims 1 to 10, **characterized in that** the catalyst (4) contains at least 30% by weight of oxides, preferably metal oxides, especially transition metal oxides.

12. Reactor according to one of Claims 1 to 9 and 11, **characterized in that** the catalyst is present in the form of a pouring or packing with a depth of at least 3 cm seen in the flow direction.

13. Process for carrying out catalytic, exothermic gas phase reactions using the reactor according to Claim 1 with the measures:
i) introduction of at least one homogeneous gas mixture with respect to its substance composition, which contains at least one oxidant, at least one component to be oxidized and at least one substance which is inert to the substances reacting with one another, as a feed gas through at least one feed line (30), which is connected to one or more mixing units for mixing the oxidant, the component to be oxidized and the inert substance, into an entry zone (1) of a reactor, where the local concentrations of the components in the feed gas have variation coefficients of less than or equal to 0.1, where the variation coefficient of the local concentration of a substance expresses the ratio of the standard deviation of the local substance concentration to the mean value of the local substance concentration,
ii) supply of the feed gas from the entry zone (1) to a reaction zone (2) comprising a catalyst (4) under conditions where the feed gas reacts completely or partially in an exothermic reaction in the reaction zone (2) to give a product gas,
iii) leading off of the product gas through an exit zone (3) from the reactor, and
iv) provision of a device for leading through a cooling medium as means for decreasing the transport of reaction heat formed in the reaction zone (2) into the entry zone (1) wherein the device for leading through a cooling medium is a support, which is flowed through by a cooling medium, for the catalyst (4), which support separates entry zone (1) and exit zone (3).

14. Process according to Claim 13, **characterized in that** the local concentrations of the components in the feed gas have variation coefficients of less than 0.05, particularly preferably of less than 0.03, where the variation coefficient of the local concentrations of a substance expresses the ratio of the standard deviation of the local substance concentrations to the mean value of the local substance concentrations.

15. Process according to one of Claims 13 to 14, **characterized in that** the feed gas used is an ammonia- and oxygen-containing gas mixture.

16. Process according to one of Claims 13 to 15, **characterized in that** a catalyst formed in honeycomb form is employed.

17. Process according to one of Claims 13 to 16, **characterized in that** a the catalyst contains at least 30% by weight of oxides, preferably metal oxides, especially transition metal oxides, is employed.

18. Process according to one of Claims 13 to 16, **characterized in that** a catalyst in the form of a catalyst pouring or of a catalyst packing is employed that has a depth of at least 3 cm seen in the flow direction.

19. Use of the reactor according to one of Claims 1 to 12 for ammonia oxidation.

20. Use according to Claim 19, **characterized in that** the reactor is integrated into a plant for the preparation of caprolactam or of nitric acid.

## Revendications

1. Réacteur pour réactions catalytiques exothermiques en phase gazeuse par transformation d'un gaz réactif en un gaz produit, comprenant dans la direction d'écoulement du gaz réactif :
- une zone d'entrée (1),
- une zone de réaction (2) contenant au moins un catalyseur (4), la zone de réaction (2) ne remplissant qu'une partie de la section transversale du réacteur,
- une zone de sortie (3) pour le gaz produit,
- la zone d'entrée (1), qui est une chambre vide ou qui est une chambre qui comprend des composants internes fonctionnels qui ne servent pas au mélange, étant alimentée par au moins une conduite d'alimentation (30) avec un mélange gazeux homogène au regard de sa composition de matière, qui contient au moins un oxydant, au moins un composant à oxyder et au moins une substance inerte pour les matières qui réagissent entre elles, en tant que gaz réactif,
- la conduite d'alimentation (30) étant raccordée avec un ou plusieurs dispositifs de mélange pour le mélange de l'oxydant, du composant à oxyder et de la substance inerte, et
- un dispositif (9) pour le passage d'un milieu réfrigérant étant prévu en tant que moyen de réduction du transport de la chaleur générée dans la zone de réaction (2) dans la zone d'entrée (1), le dispositif (9) pour le passage d'un milieu réfrigérant étant un support (29) pour le catalyseur (4) traversé par un milieu réfrigérant, qui sépare la zone d'entrée (1) et la zone de sortie (3).

2. Réacteur selon la revendication 1, **caractérisé en ce que** la zone d'entrée (1) ne comprend pas de composants internes pour le mélange du mélange gazeux homogène, notamment pas de garnissages inertes pour le mélange ou la dispersion du mélange gazeux homogène.

3. Réacteur selon l'une quelconque des revendications 1 à 2, **caractérisé en ce que** les parois intérieures du réacteur sont configurées au moins dans la zone de la zone d'entrée (1) ou dans la zone de la zone de réaction (2) en un matériau inerte, le matériau inerte étant choisi dans le groupe constitué par les céramiques, le verre de quartz, la chamotte, l'émail et les matériaux à surfaces passivées et/ou polies, notamment les métaux à surfaces passivées et/ou polies.

4. Réacteur selon la revendication 1, **caractérisé en ce que** la zone d'entrée (1), la zone de réaction (2) et la zone de sortie (3) sont entourées par une enveloppe de réacteur (5), qui est également un support pour le catalyseur (4) et pour une enveloppe isolante (6), qui isole thermiquement de l'enveloppe de réacteur (5) l'espace intérieur du réacteur dans la zone d'au moins une partie de la zone d'entrée (1) ou dans la zone de la zone de réaction (2) et d'au moins une partie de la zone d'entrée (1), et empêche ainsi le transfert de chaleur depuis la zone de réaction (2) dans le gaz réactif dans la zone d'entrée (1).

5. Réacteur selon la revendication 1, **caractérisé en ce que** la zone d'entrée (1), la zone de réaction (2) et la zone de sortie (3) sont entourées par une enveloppe de réacteur (5) configurée à double paroi dans la hauteur de la zone d'entrée (1) ou dans la hauteur de la zone d'entrée (1) et de la zone de réaction (2), et **en ce qu'**un raccord (7) pour un milieu réfrigérant pour l'introduction dans l'espace (9) formé par l'enveloppe de réacteur à double paroi est prévu à au moins une extrémité de l'enveloppe de réacteur à double paroi, pour le refroidissement de la paroi intérieure de l'enveloppe de réacteur (5).

6. Réacteur selon la revendication 5, **caractérisé en ce qu'**au moins une ouverture (10) est prévue dans la paroi intérieure de l'enveloppe de réacteur à double paroi (5), par laquelle le milieu réfrigérant entre dans la zone d'entrée (1) et se mélange avec le gaz réactif.

7. Réacteur selon l'une quelconque des revendications 4 à 6, **caractérisé en ce que** l'enveloppe de réacteur (5) est configurée sous la forme d'une paroi d'un contenant sous pression ou est disposée dans une chambre qui est entourée par une enveloppe de pression.

8. Réacteur selon les revendications 4 à 7, **caractérisé en ce qu'**au moins une enveloppe de réacteur (5) configurée à double paroi est prévue en plus de ladite au moins une enveloppe isolante (6), qui est également un support pour le catalyseur (4) et qui comprend au moins un raccord (7) pour un milieu réfrigérant.

9. Réacteur selon la revendication 1, **caractérisé en ce que** celui-ci comprend une gaine (14) en un matériau résistant à la température et isolant thermique, dans laquelle le catalyseur (4) est inséré.

10. Réacteur selon l'une quelconque des revendications 1 à 9, **caractérisé en ce que** le catalyseur (4) est configuré sous la forme d'un nid d'abeilles ou est appliqué sur et/ou dans un matériau support configuré sous la forme d'un nid d'abeilles.

11. Réacteur selon l'une quelconque des revendications 1 à 10, **caractérisé en ce que** le catalyseur (4) contient au moins 30 % en poids d'oxydes, de préférence d'oxydes de métaux, notamment d'oxydes de métaux de transition.

12. Réacteur selon l'une quelconque des revendications 1 à 9 et 11, **caractérisé en ce que** le catalyseur se présente sous la forme d'un remplissage ou d'un garnissage d'une profondeur dans la direction de l'écoulement d'au moins 3 cm.

13. Procédé de réalisation de réactions catalytiques exothermiques en phase gazeuse utilisant le réacteur selon la revendication 1, comprenant les mesures suivantes :
i) l'introduction d'au moins un mélange gazeux homogène au regard de sa composition de matière, qui contient au moins un oxydant, au moins un composant à oxyder et au moins une substance inerte pour les matières qui réagissent entre elles, en tant que gaz réactif par au moins une conduite d'alimentation (30), qui est raccordée avec un ou plusieurs dispositifs de mélange pour le mélange de l'oxydant, du composant à oxyder et de la substance inerte, dans une zone d'entrée (1) d'un réacteur, les concentrations locales des composants dans le gaz réactif présentant des coefficients de variation inférieurs ou égaux à 0,1, le coefficient de variation de la concentration locale d'une matière exprimant le rapport entre l'écart-type de la concentration locale de la matière et la valeur moyenne de la concentration locale de la matière,
ii) l'introduction du gaz réactif depuis la zone d'entrée (1) dans une zone de réaction (2) contenant un catalyseur (4), dans des conditions telles que le gaz réactif soit transformé en totalité ou en partie dans la zone de réaction (2) par une réaction exothermique en un gaz produit,
iii) le déchargement du gaz produit du réacteur par une zone de sortie (3), et
iv) la mise à disposition d'un dispositif pour le passage d'un milieu réfrigérant en tant que moyen de réduction du transport de la chaleur de réaction formée dans la zone de réaction (2) dans la zone d'entrée (1), le dispositif pour le passage d'un milieu réfrigérant étant un support pour le catalyseur (4) traversé par un milieu réfrigérant, qui sépare la zone d'entrée (1) et la zone de sortie (3).

14. Procédé selon la revendication 13, **caractérisé en ce que** les concentrations locales des composants dans le gaz réactifs présentent des coefficients de variation inférieurs à 0,05, de manière particulièrement préférée inférieurs à 0,03, le coefficient de variation de la concentration locale d'une matière exprimant le rapport entre l'écart-type de la concentration locale de la matière et la valeur moyenne de la concentration locale de la matière.

15. Procédé selon l'une quelconque des revendications 13 à 14, **caractérisé en ce qu'**un mélange gazeux contenant de l'ammoniac et de l'oxygène est utilisé en tant que gaz réactif.

16. Procédé selon l'une quelconque des revendications 13 à 15, **caractérisé en ce qu'**un catalyseur configuré sous la forme d'un nid d'abeilles est utilisé.

17. Procédé selon l'une quelconque des revendications 13 à 16, **caractérisé en ce qu'**un le catalyseur contient au moins 30 % en poids d'oxydes, de préférence d'oxydes de métaux, notamment d'oxydes de métaux de transition, est utilisé.

18. Procédé selon l'une quelconque des revendications 13 à 16, **caractérisé en ce qu'**un catalyseur sous la forme d'un remplissage catalytique ou d'un garnissage catalytique est utilisé, qui présente une profondeur dans la direction de l'écoulement d'au moins 3 cm.

19. Utilisation du réacteur selon l'une quelconque des revendications 1 à 12 pour l'oxydation d'ammoniac.

20. Utilisation selon la revendication 19, **caractérisée en ce que** le réacteur est intégré dans une unité pour la fabrication de caprolactame ou d'acide nitrique.
